(19) Europäisches Patentamt
European Patent Office
Office européen des brevets

(11) Veröffentlichungsnummer: **0 172 437**
**B1**

(12) # EUROPÄISCHE PATENTSCHRIFT

(45) Veröffentlichungstag der Patentschrift: **06.09.89**

(51) Int. Cl.⁴: **B 01 D 13/04**, A 61 M 1/16, C 08 B 11/00

(21) Anmeldenummer: **85109286.6**

(22) Anmeldetag: **24.07.85**

(54) **Dialysemembran aus modifizierter Cellulose mit verbesserter Biokompatibilität.**

(30) Priorität: **18.08.84 DE 3430503**
**10.07.85 DE 3524596**

(43) Veröffentlichungstag der Anmeldung:
**26.02.86 Patentblatt 86/9**

(45) Bekanntmachung des Hinweises auf die Patenterteilung:
**06.09.89 Patentblatt 89/36**

(84) Benannte Vertragsstaaten:
**DE FR GB IT SE**

(56) Entgegenhaltungen:
**DE-A-1 720 087**
**FR-A-2 380 052**
**US-A-4 051 040**

(73) Patentinhaber: **Akzo Patente GmbH, Postfach 10 01 49 Kasinostrasse 19-23, D-5600 Wuppertal-1 (DE)**

(72) Erfinder: **Baurmeister, Ulrich, Dr. Dipl.-Ing., Holbeinstrasse 21, D-1000 Berlin 45 (DE)**
Erfinder: **Brodowski, Walter, Dr. Dipl.-Chem., Neudorfer Strasse 8, D-8762 Amorbach (DE)**
Erfinder: **Diamantoglou, Michael, Dr. Dipl.-Chem., Kolpingstrasse 4, D-8765 Erlenbach (DE)**
Erfinder: **Dünweg, Gustav, Untere Lichtenplatzer Strasse 80, D-5600 Wuppertal 2 (DE)**
Erfinder: **Henne, Werner, Dr. Dipl.-Chem., Winterbergstrasse 46, D-5600 Wuppertal 2 (DE)**
Erfinder: **Pelger, Michael, Dr. Dipl.-Chem., Buschenburg 32, D-5600 Wuppertal 22 (DE)**
Erfinder: **Schulze, Helmut, Dr. Dipl.-Chem., Am Langensiepen 14, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft eine Dialysemembran für die Hämodialyse in Form von Flachfolien, Schlauchfolien oder Hohlfäden aus durch Substitution modifizierter Cellulose.

Dialysemembranen aus Cellulose für die Hämodialyse in Form von Flachfolien, Schlauchfolien oder Hohlfäden sind bereits seit längerem bekannt und werden nach wie vor bevorzugt in künstlichen Nieren eingesetzt. Einige Beschwerden verursachende Eigenschaften ließen sich jedoch noch nicht beseitigen.

So ist aus der DE-PS 2 705 735 eine Dialysemembran für die Hämodialyse, mit verminderter thrombogener Wirkung aus Cellulose, mit daran chemisch gebundenen antithrombogenen Verbindungen bekannt, wobei die Dialysemembran aus zwei oder mehreren Schichten einer aus Cuoxamcelluloselösungen regenerierten Cellulose besteht, die jeweils aus getrennt gespeisten Schlitzen einer Spinndüse erhalten worden sind, wobei die auf der Blutseite angeordnete Celluloseschicht ganz oder teilweise eine modifizierte Cellulose ist, die antithrombogene Wirkstoffe chemisch gebunden enthält.

Es ist aber auch bereits schon in der DE-OS 1 720 087 vorgeschlagen worden, dadurch daß das Polymermaterial der Membran mit einem Alkylhalogenid umgesetzt und danach das erhaltene Material mit einem Alkalisalz einer antithrombogenen Verbindung mit kationischen Rest (z.B. Heparin oder eine Heparinoidverbindung) umgesetzt wird, die Gefahr der Gerinnung des Blutes zu verringern. Zu den möglichen Alkylhalogeniden werden dabei auch Halogenalkyldialkylamine gerechnet. Auch Cellulose, jedoch im wesentlichen Celluloseacetat, zählt zu den möglichen Polymeren.

Eine antithrombogene Wirkung dieser bekannten Dialysemembranen wird nur beobachtet, wenn der Substitutionsgrad der modifizierten Cellulose hoch ist, d.h. größer als mindestens 0,1, und in einem gesonderten Schritt eine Vorheparinisierung mit relativ hohen Heparinkonzentrationen (0,1 bis 1 Gew.-% Lösungen) durchgeführt wird.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig ein weiteres Problem auf, das bisher noch nicht zufriedenstellend gelöst werden konnte und zwar war festgestellt worden, daß bei der Behandlung eines Nierenkranken mit Dialysatoren mit Cellulose-Membranen in der ersten Zeit der Dialysebehandlung ein vorübergehender Leukozytenabfall stattfinden kann. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12 000 Zellen/$mm^3$.

Die Leukopenie bei Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al, Kidney International Vol. 24, Seite 764ff, 1983, und D.E. Chenoweth, Asaio-Journal Vol. 7, Seite 44ff, 1984.

Obwohl die klinische Bedeutung der Komplement-Aktivierung noch nicht geklärt ist, ist man bestrebt diese bei der Hämodialyse möglichst auszuschließen.

Diese drei Faktoren Blutgerinnung, Leukopenie und Komplement-Aktivierung betrachtet man heute als wesentliche Parameter für die Biokompatibilität von Dialysemembranen. Es war Aufgabe der vorliegenden Erfindung unter Beibehaltung der relativ günstigen Eigenschaften der Cellulosemembran hinsichtlich der Blutgerinnung eine Dialysemembran zur Verfügung zu stellen, die die Effekte der Komplement-Aktivierung und Leukopenie deutlich verringert.

Es wurde festgestellt, daß eine Dialysemembran für die Hämodialyse in Form von Flachfolien, Schlauchfolien oder Hohlfäden durch Substitution modifizierter Cellulose die gestellte Aufgabe löst, wenn bei einer solchen Dialysemembran der mittlere Substitutionsgrad der modifizierten Cellulose im engen Bereich von 0,02 bis 0,07 liegt.

Unter dem mittleren Substitutionsgrad der durch Substitution modifizierten Cellulose soll im Rahmen der vorliegenden Erfindung die mittlere Anzahl der Substituenten pro 1 Glucoseanhydrideinheit der die Membran bildenden Cellulose verstanden werden.

Die Einstellung des gewünschten mittleren Substitutionsgrades kann durch die Mengenverhältnisse bei der Substitution oder durch Vermischung von unterschiedlich substituierten Cellulosen bzw. substituierter mit nichtsubstituierter Cellulose erfolgen.

Geeignete durch Substitution modifizierte Cellulosen sind veresterte oder verätherte Cellulosen. Verätherte Cellulosen sind bevorzugt.

Die im Rahmen der Erfindung sich als erfolgreich herausgestellten Dialysemembranen enthalten modifizierte Cellulose, die eine durch die Formel

$$\text{Cellulose}-R'-X-Y$$

wiedergegebene Struktur aufweist, wobei

X für $-NR''-$ und/oder $-\overset{+}{N}R''_2$ –und/oder $-S-$ und/oder $-SO-$ und/oder $-SO_2-$ und/oder

$$-\underset{\underset{O}{\|}}{C}-\underset{\underset{R}{|}}{N}-$$

und/oder $-CO-O-$ und/oder $-O-$

Y für $-R$ und/oder $-NR_2$ und/oder $-Si(OR'')_3$ und/oder $-SO_3H$ und/oder $-COOH$ und/oder $-PO_3H_2$ und/oder $-\overset{+}{N}HR_2$ bzw. deren Salze

R' für eine Alkylengruppe und/oder Cycloalkylengruppe und/oder Arylengruppe mit insgesamt 1 bis 25 C-Atomen

R'' für ein Wasserstoffatom oder R und

R für eine Alkylgruppe mit 1 bis 5 C-Atomen und/oder eine Cycloalkylgruppe und/oder Arylgruppe steht.

Besonders geeignet aber sind durch Substitution modifizierte Cellulosen, die im Substituenten tertiäre Aminogruppen und/oder Carboxygruppen und/oder Sulfogruppen und/oder Phosphonatgruppen enthalten.

Zu den besonders bevorzugten Substituenten gehören Dialkylaminoalkyl und/oder Carboxyalkyl und/oder Sulfoalkyl und/oder Sulfoaryl und/oder Phosphonatalkyl und/oder Phosphonataryl, wobei die Alkylgruppen im Substituenten bevorzugt Äthylgruppen und/oder Methylgruppen sind.

Ein anderer besonders bevorzugter Substituent ist Silicatopropyl, der auch zusammen mit den anderen als geeignet genannten Substituenten erfindungsgemäße Dialysemembranen ergibt.

Die modifizierten Cellulosen können nach den aus der Literatur bekannten Verfahren hergestellt werden. Hierzu kann beispielsweise auf Houben Weyl «Methoden der org. Chemie», Band 14, Teil 2, (1963), Seiten 868–898 oder auf Ullmanns Encyklopädie der techn. Chemie, 4. Aufl. 1975, Bd. 9, Seiten 200–212 hingewiesen werden.

Im Rahmen der vorliegenden Erfindung wurde die Komplement-Aktivierung anhand der Fragmente C3a beurteilt. Dazu wurden in vitro 300 ml heparinisiertes Blutplasma über einen Zeitraum von 4 Std. mit einem Plasmafluß von 200 ml/min. durch einen Dialysator mit 1 $m^2$ effektiver Austauschfläche rezirkuliert. In dem Plasma wurden die C3a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. In der Fig. 1 sind derartige Messungen in ihrem zeitlichen Verlauf graphisch dargestellt, und zwar zeigt die Kurve a das mit einer üblichen Cellulose-Membran erhaltene Ergebnis und die Kurve b das mit einer Erfindungsmembran erhaltene Ergebnis, bei der als modifizierte Cellulose Diäthylaminoäthylcellulose mit einem Substitutionsgrad von 0,04 verwendet worden war.

Als weiteres Maß für die Biokompatibilität wird die Leukopenie herangezogen. Bestimmt wurde sie im Rahmen der vorliegenden Erfindung in vivo an Schafen. Dazu werden Dialysatoren mit ein Quadratmeter effektiver Austauschfläche eingesetzt. Der Blutfluß betrug 200 ml/min. Die Leukozytenzahl wurde in bestimmten Zeitabständen über einen Zeitraum von insgesamt 2 Std. gezählt. Zur Auswertung wurde die prozentuale Änderung, um die die Leukozytenzahl sich zum jeweiligen Meßzeitpunkt verändert hatte, bezogen auf den Anfangswert, herangezogen. Die bei einer solchen Messung erhaltenen Werte sind in der Fig. 2 graphisch dargestellt und zwar zeigt die Kurve a das mit einer üblichen Cellulosemembran erhaltene Ergebnis und die Kurve b das mit einer erfindungsgemäßen Membran erhaltene Ergebnis, bei der als modifizierte Cellulose Diäthylaminoäthylcellulose mit einem Substitutionsgrad von 0,04 verwendet worden war. Zur Bewertung wurde der Meßwert im Minimum der Kurve herangezogen.

Als Meßgröße für die Blutgerinnung wurde der prozentuale Druckanstieg, bezogen auf den Anfangsdruck, vor dem Dialysator nach 2 Std. gewählt.

Um diese drei Parameter für die Beurteilung der Biokompatibilität zusammenzufassen, wird ein Unverträglichkeitsindex gebildet. Wird die Maßzahl für die Komplement-Aktivierung mit K

bezeichnet, die Maßzahl für die Leukopenie mit L und die Maßzahl für die Blutgerinnung mit C, so errechnet sich der Unverträglichkeitsindex (UI) gemäß der folgenden Formel

$$UI = 0,1 \times K - L + C$$

Je besser die Biokompatibilität ist, desto geringer ist der Wert für den Unverträglichkeitsindex UI.

Da die vorstehenden Methoden sehr aufwendig sind und durch Erfahrung festgestellt wurde, daß auch aus vereinfachten in die Vitro-Messungen auf die volle Wirksamkeit Rückschlüsse gezogen werden können, wurde teilweise zur Bestätigung der Erfindung auf solche vereinfachten Methoden zurückgegriffen, die nachfolgend beschrieben sind.

Aus einer 8% Cellulose-Cuprammonium-Lösung wird auf eine Glasplatte ein Film von 150 µm gerakelt. Nach Fällen in NaOH-Lösung (5%), Entkupfern in Schwefelsäurebädern, Tauchen in Alkohol/Glycerin-Lösung und anschließendem Trocknen durch Spannen auf ein Becherglas mit 15 cm Durchmesser, wird eine Membran mit 13 µm Dicke erhalten.

Aus dieser Membran werden Scheiben von 5 cm Durchmesser geschnitten.

Eine Membranscheibe wird in einer Gewebekulturschale aus Polystyrol (Falcon Fa. Becton & Dickinson) mit physiologischer Kochsalzlösung vorgewaschen. Nach dem Abgießen der Kochsalzlösung werden 8 ml frisches mit 5 IU Heparin/ml antikoaguliertes Humanblut zugegeben.

Die Inkubation erfolgte in den abgedeckten Gewebekulturschalen auf einem Desagaschüttler bei 37 °C über eine Zeit von 1 h in einem mit 5% $CO_2$ belüfteten Brutschrank. Parallel dazu wurde in einem Leerversuch 8 ml Humanblut in einer Gewebekulturschale ohne Membran inkubiert.

Die Konzentration der Komplementkomponente C3a betrug in der Schale mit der Cellulose-Membran 4300 ng/ml und im Leerversuch 580 ng/ml.

Zur Untersuchung des Einflusses auf die Gerinnung wurde die Thrombozytenzahl am Anfang und am Ende des Experiments mit einem Coulter Counter ZBI untersucht.

Im Fall der Cellulose-Membran waren nach 1 Stunde Inkubation noch 90% Thrombozyten vorhanden.

Im Leerversuch wurde ein Wert von 95% erhalten.

In den nachfolgenden Beispielen wird die Erfindung näher erläutert:

Beispiel 1

Zur Herstellung der zu vergleichenden Dialysemembranen wird von einer Cuoxamlösung A ausgegangen, die 9 Gew.-% Diäthylaminoäthylcellulose mit einem mittleren Substitutionsgrad von 0,4 enthält. Eine 9 Gew.-%ige Cellulose (Baumwollinters) enthaltende Cuoxamlösung B wird in solchen Verhältnissen mit der Cuoxamlösung A gemischt, daß der gewünschte mittlere Substitutionsgrad (DS) eingestellt wird.

Dazu werden die Cuoxamlösungen A und B nach Filtration im vorgesehenen Verhältnis einem wirksamen Mischer, der eine homogene Mischung gewährleistet, zudosiert. Für das vorliegende Beispiel wurden Mischungen hergestellt, wie sie in der Tabelle 1 einschließlich der jeweils erhaltenen mittleren Substitutionsgrade DS aufgeführt sind.

Tabelle 1

| Versuch | Gewichtsteile Cuoxam-Lösung A | Gewichtsteile Cuoxam-Lösung B | Substitutionsgrad (DS) |
|---|---|---|---|
| a | 0 | 1 | 0 |
| b | 1 | 40 | 0,01 |
| c | 1 | 15 | 0,026 |
| d | 1 | 10 | 0,04 |
| e | 1 | 7,3 | 0,055 |
| f | 1 | 5 | 0,08 |
| g | 1 | 4 | 0,1 |

Die in der Tabelle 1 aufgeführten Gemische a–g wurden dem ringförmigen Schlitz einer Hohlfadenspinndüse mit einer zentralen Bohrung für eine hohlraumbildende Flüssigkeit zugeführt, gemeinsam mit Isopropylmyristat als hohlraumbildender Flüssigkeit ausgepreßt und in einem üblichen Fällbad koaguliert. Die erhaltenen Hohlfäden wurden in der für das Kupferammoniakverfahren hinreichend bekannten Arbeitsweise gewaschen, getrocknet und aufgewickelt.

Mit den erhaltenen Fäden wurden Dialysatoren hergestellt und in diesen die Biokompatibilität untersucht. Die Ergebnisse sind in der Tabelle 2 zusammengestellt. Es zeigt sich dabei deutlich, daß die Versuche c, d und e mit erfindungsgemäßen Dialysemembranen einen deutlich geringeren Unverträglichkeitsindex aufweisen als die Vergleichsversuche a, b, f und g und damit die erwünschte Biokompatibilität zeigen.

Tabelle 2

| Parameter | Versuch a | b | c | d | e | f | g |
|---|---|---|---|---|---|---|---|
| C3a[%] | 2500 | 2300 | 500 | 200 | 180 | 150 | 150 |
| Leukoz. [%] | −80 | −70 | −10 | −5 | −5 | −5 | −5 |
| Druckanstieg [%] | 40 | 35 | 50 | 60 | 90 | 400 | 500 |
| Unverträgl.-Index UI | 370 | 335 | 110 | 85 | 113 | 420 | 520 |

Beispiel 2

Wie vorstehend im Zusammenhang mit der vereinfachten Prüfmethode beschrieben ist, wurde eine Flachmembran aus Carboxylmethyl-Cellulose hergestellt. Der Substitutionsgrad betrug 0,06. Im Inkubationsversuch wurden ebenfalls Membranen mit 5 cm Durchmesser eingesetzt. Nach einer Inkubationszeit von 1 h beträgt die C3a-Konzentration 1350 ng/ml; das sind 31% des Wertes der reinen Cellulose-Membran.

Die Thrombozytenzahl betrug nach 1 Stunde Inkubation noch 87% des Anfangswertes und entsprach damit im wesentlichen Cellulose-Membranen.

Beispiel 3

Entsprechend dem Beispiel 2 wurde eine Membran aus Sulfoäthyl-Cellulose hergestellt. Der mittlere Substitutionsgrad betrug 0,06. Eine entsprechende Flachmembran von 5 cm Durchmesser wurde wie in Beispiel 2 inkubiert. Nach 1 Stunde beträgt die C3a-Konzentration 1150 ng/ml, das sind 27% des Wertes der reinen Cellulose-Membran.

Die Thrombozytenzahl betrug 89% des Anfangswertes und war damit praktisch gleich mit dem bei Cellulose-Membranen.

Beispiel 4

Entsprechend dem Beispiel 2 wurde eine Membran aus modifizierter Cellulose, die sowohl Diethylaminoäthylcellulose als auch Sulfoäthylcellulose im Verhältnis 3:1 enthielt, hergestellt. Der mittlere Substitutionsgrad beträgt 0,05. Nach Inkubation mit Humanfrischblut entsprechend dem Beispiel 2 erhält man eine C3a-Konzentration von 975 ng/ml, das sind 23% des Wertes der reinen Cellulosemembran.

Hier betrug die Thrombozytenzahl 80% des Anfangswertes und war damit etwas niedriger als bei Cellulose-Membranen.

**Patentansprüche**

1. Dialysemembran für die Hämodialyse in Form von Flachfolien, Schlauchfolien oder Hohlfäden, aus durch Substitution modifizierter Cellulose, dadurch gekennzeichnet, daß der mittlere Substitutionsgrad der modifizierten Cellulose 0,02 bis 0,07 beträgt.

2. Dialysemembran nach Anspruch 1, dadurch gekennzeichnet, daß die modifizierte Cellulose eine durch die Formel

Cellulose–R′–X–Y

wiedergegebene Struktur aufweist, wobei

X für $-NR''-$ und/oder $-\overset{+}{N}R''_2-$ und/oder $-S-$ und/oder $-SO-$ und/oder $-SO_2-$ und/oder

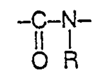

und/oder –CO–O– und/oder –O–

Y für $-R$ und/oder $-NR_2$ und/oder $-Si(OR'')_3$ und/oder $-SO_3H$ und/oder $-COOH$ und/oder $-PO_3H_2$ und/oder $-\overset{+}{N}HR_2$ bzw. deren Salze

R′ für eine Alkylengruppe und/oder Cycloalkylengruppe und/oder Arylengruppe mit insgesamt 1 bis 25 C-Atomen

R″ für ein Wasserstoffatom oder R und

R für eine Alkylgruppe mit 1 bis 5 C-Atomen und/oder eine Cycloalkylgruppe und/oder Arylgruppe steht.

3. Dialysemembran nach Anspruch 2, dadurch gekennzeichnet, daß die modifizierte Cellulose im Substituenten tertiäre Aminogruppen und/oder Carboxygruppen und/oder Sulfogruppen und/oder Phosphonatgruppen enthält.

4. Dialysemembran nach Anspruch 3, dadurch gekennzeichnet, daß der Substituent Dialkylaminoalkyl und/oder Carboxyalkyl und/oder Sulfoalkyl und/oder Sulfoaryl und/oder Phosphonatalkyl und/oder Phosphonataryl ist.

5. Dialysemembran nach einem der Ansprüche 1 bis 2, dadurch gekennzeichnet, daß der Substituent Silicatopropyl ist.

6. Dialysemembran nach einem der Ansprüche 2–4, dadurch gekennzeichnet, daß die Alkylgruppen im Substituenten Äthylgruppen und/oder Methylgruppen sind.

**Claims**

1. A dialysis membrane for hemodialysis in the form of flat films, tubular films or hollow filaments of cellulose modified by substitution, characterized in that the modified cellulose has an average degree of substitution of from 0.02 to 0.07.

2. A dialysis membrane as claimed in claim 1, characterized in that the modified cellulose has a structure represented by the following formula

cellulose–R′–X–Y

in which

X represents $-NR''-$ and/or $-\overset{+}{N}R_2''$ and/or –S– and/or –SO– and/or $-SO_2-$ and/or

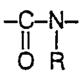

and/or –CO–O– and/or –O–,

Y represents –R and/or $-NR_2$ and/or $-Si(OR'')_3$ and/or $-SO_3H$ and/or –COOH and/or $-PO_3H_2$ and/or $-\overset{+}{N}HR_2$ or salts thereof,

R′ is an alkylene group and/or cycloalkylene group and/or arylene group containing a total of 1 to 25 C atoms,

R″ is a hydrogen atom or R and

R is an alkyl group containing 1 to 5 C atoms and/or a cycloalkyl group and/or an aryl group.

3. A dialysis membrane as claimed in claim 2, characterized in that the modified cellulose contains tertiary amino groups and/or carboxy groups and/or sulfo groups and/or phosphonate groups in the substituent.

4. A dialysis membrane as claimed in claim 3, characterized in the substituent is dialkylaminoalkyl and/or carboxyalkyl and sulfoalkyl and/or sulfoaryl and/or phosphonate alkyl and/or phosphonate aryl.

5. A dialysis membrane as claimed in any of claims 1 to 2, characterized in the the substituent is silicatopropyl.

6. A dialysis membrane as claimed in any of claims 2 to 4, characterized in that the alkyl groups in the substituent are ethyl groups and/or methyl groups.

**Revendications**

1. Membrane de dialyse pour l'hémodialyse, sous forme de feuilles plates, de tubes souples ou de fibres creuses, en cellulose modifiée par substitution, caractérisée en ce que le degré moyen de substitution de la cellulose modifiée est de 0,02 à 0,07.

2. Membrane de dialyse selon la revendication 1, caractérisée en ce que la cellule modifiée a une structure correspondant à la formule

Cellulose–R′–X–Y

dans laquelle

X est $-NR''-$ et/ou $-\overset{+}{N}R_2''-$ et/ou –S– et/ou –SO– et/ou $-SO_2-$ et/ou

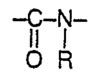

et/ou –CO–O– et/ou –O–,

Y est –R et/ou $-NR_2$ et/ou $-Si(OR'')_3$ et/ou $-SO_3H$ et/ou –COOH et/ou $-PO_3H_2$ et/ou $-\overset{+}{N}HR_2$, ou leurs sels,

R′ est un groupe alkylène et/ou un groupe cycloalkylène et/ou un groupe arylène ayant en tout de 1 à 25 atomes de carbone,

R″ est un atome d'hydrogène, ou le radical R, et

R est un groupe alkyle ayant de 1 à 5 atomes de carbone et/ou un groupe cycloalkyle et/ou un groupe aryle.

3. Membrane de dialyse selon la revendication 2, caractérisée en ce que la cellulose modifiée contient dans le substituant des groupes amino tertiaires et/ou des groupes carboxy et/ou des groupes sulfo et/ou des groupes phosphonato.

4. Membrane de dialyse selon la revendication 3, caractérisée en ce que le substituant est un radical dialkylaminoalkyle et/ou carboxyalkyle et/ou sulfoalkyle et/ou sulfoaryle et/ou phosphonatoalkyle et/ou phosphonatoaryle.

5. Membrane de dialyse selon l'une des revendications 1 ou 2, caractérisée en ce que le substituant est le radical silicatopropyle.

6. Membrane de dialyse selon l'une des revendications 2 à 4, caractérisée en ce que les groupes alkyle du substituant sont des groupes éthyle et/ou des groupes méthyle.

Fig. 1

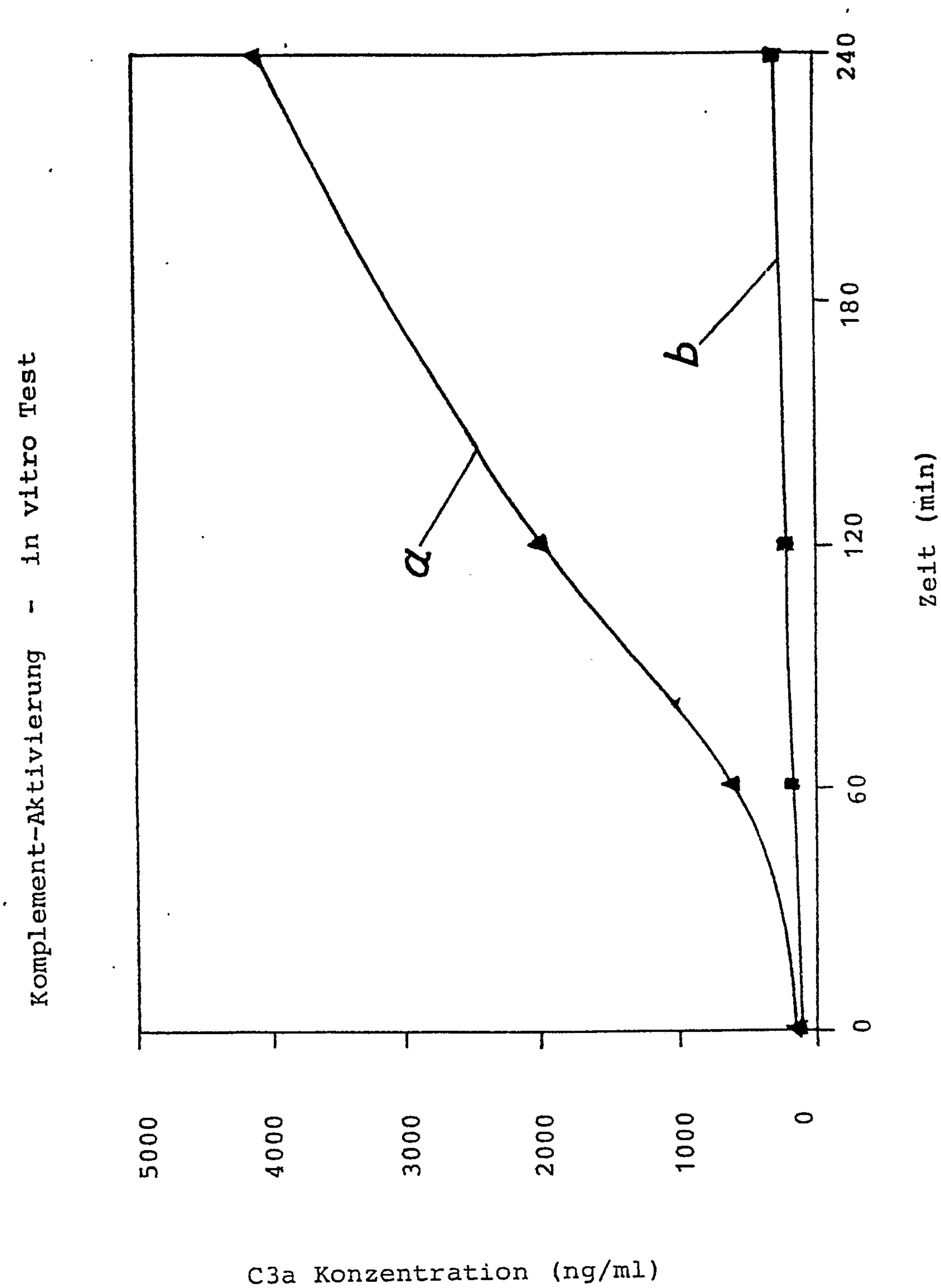

Komplement-Aktivierung - in vitro Test
a
b
C3a Konzentration (ng/ml)
5000
4000
3000
2000
1000
0
Zeit (min)
0
60
120
180
240

Fig. 2

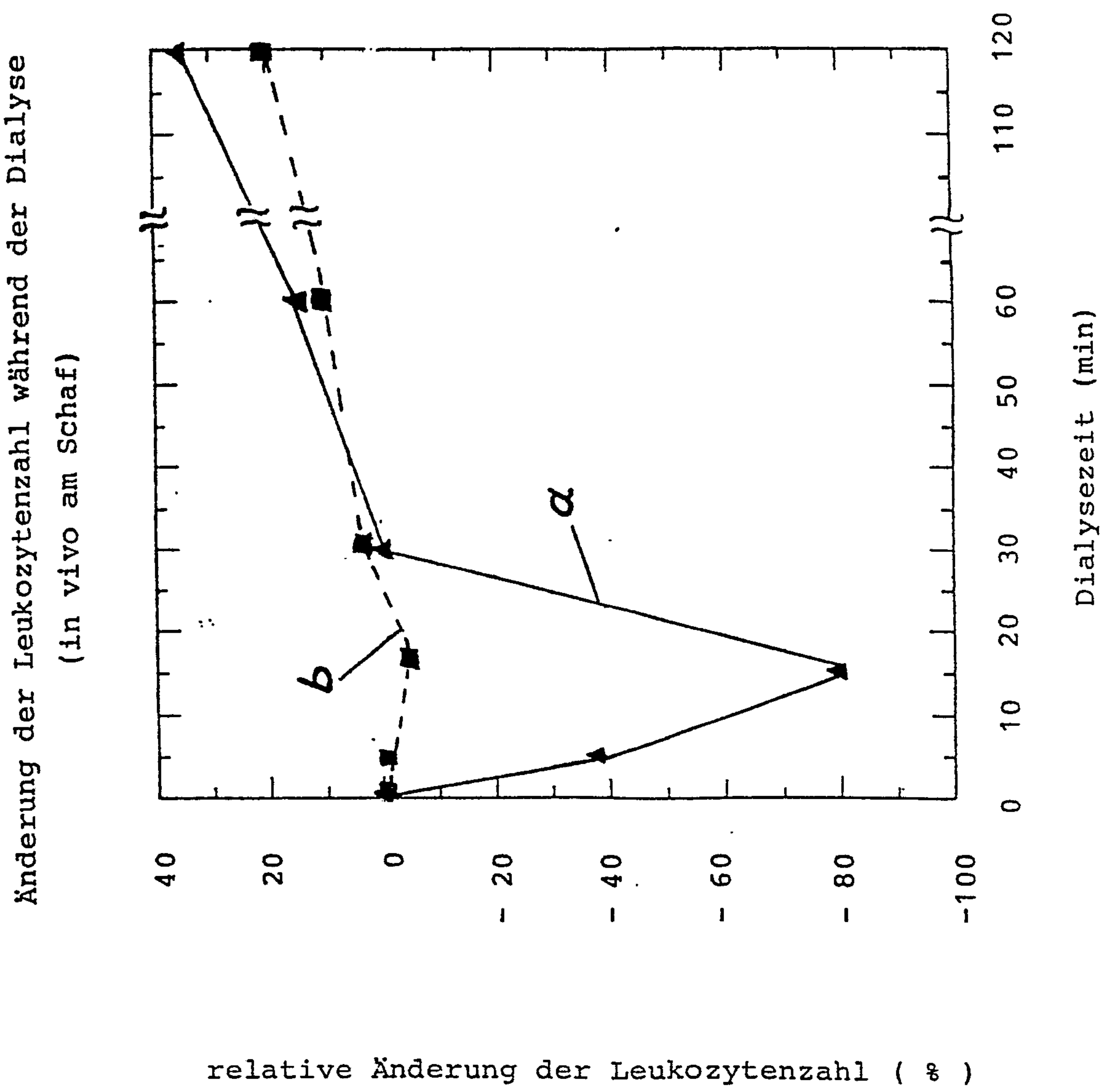
Änderung der Leukozytenzahl während der Dialyse
(in vivo am Schaf)
40
20
0
- 20
- 40
- 60
- 80
-100
0
10
20
30
40
50
60
110
120
a
b
Dialysezeit (min)
relative Änderung der Leukozytenzahl ( % )